# EUROPEAN PATENT SPECIFICATION

(11) **EP 2 901 631 B1**
(45) Date of publication and mention of the grant of the patent: **06.11.2019**
(21) Application number: 13774890.1
(22) Date of filing: 27.09.2013
(51) Int. Cl.: H04L 12/58

(54) **ENRICHING BROADCAST MEDIA RELATED ELECTRONIC MESSAGING**
ANREICHERUNG ELEKTRONISCHER NACHRICHTEN IN RUNDFUNKMEDIEN
ENRICHISSEMENT DE MÉDIAS ÉLECTRONIQUES RELATIFS À UNE MESSAGERIE ÉLECTRONIQUE

(30) Priority: 27.09.2012 US 201213629350
(43) Date of publication of application: 05.08.2015
(73) Proprietor: Google LLC, Mountain View, CA 94043 (US)
(72) Inventor: OZTASKENT, Ant, Sutton Surrey SM2 5TL (GB); VOLOVICH, Yaroslav, Cambridge CB4 1JN (GB)
(74) Representative: Thorniley, Peter
(86) International application number: PCT/US2013/062336
(87) International publication number: WO 2014/052847

(56) References cited:
- EP-A1- 1 324 605
- EP-A1- 1 551 179
- WO-A1-99/14947
- US-A1- 2009 293 079

## Description

### TECHNICAL FIELD

The present disclosure generally relates to linking social media applications to broadcast media delivery, and in particular, to enabling users to share content from broadcast media programs in real-time.

### BACKGROUND

Users of Internet-enabled electronic devices, such as computers, tablets, and smart phones, are increasingly interested in sharing media viewing and listening experiences with others. Sharing media content is relatively straightforward when the media content is available online (e.g. streaming video, web pages, quotes from scripts, downloadable music or videos) in which case the user can simply send electronic messages with links to the media content of interest. However, it is more difficult for a user to share information in real-time about broadcast media content because such content is typically not yet available online. For example, if a viewer wants to share a quote from a TV sitcom or movie, that viewer would need to send an email, text, tweet or a social network update, or make one or many phone-calls and/or instant messages to his or her friends with the pertinent quote. It is even harder, if at all possible, for a user to send a friend a link to, or a snippet of, or a quote from broadcast media content airing when the content is airing due to the lack of integration between the broadcast media content (e.g. television) and whatever communication device is employed by the user to share information about the media content.

In other words, it is inefficient for users to share information related to media content they are viewing on TV because sharing such information currently requires users to take some action beyond the viewing experience to link the media content from one medium to another. Returning to the example above, a user attempting to share a quote from a TV sitcom on a social networking website would either have to type the quote or search for the text of the script online in order to locate the quote. And even if the text of the script is available online, cutting and pasting the online text can be cumbersome.

US 2009/0293079 (A1) discloses an approach for extending social networking to television viewing. A community of a plurality of users is created, wherein each user is logged in to a device configured to present audio-video cintent. Presence information of one of the users in the community is determined and transmitted to a corresponding device of another one of the users.

### SUMMARY

Systems, methods and devices described herein enable users of Internet-enabled devices to share content from broadcast media programs in real-time. For example, in some implementations systems, methods and devices are operable to share and view comments associated with broadcast media content presented on a first type of device using respective Internet-enabled second devices.

More specifically, in some implementations, systems, methods and devices are operable to supplement electronic messages from viewers about a broadcast media program with content from the program, such as quotes, screenshots, video-snippets, etc. For example, a viewer of a broadcast media program uses client device (e.g. laptop, tablet computer, Smartphone, etc.) to at least transmit an electronic message to a server. In turn, the server parses the electronic message received from the client device to determine whether the electronic message is associated with a particular currently broadcast media program. In response to determining that the received electronic message includes a reference in user composed content of the electronic message to a currently broadcast media program, the server generates a corresponding supplemented electronic message, from the received electronic message, by including a displayable indicator of media content from the currently broadcast media program. The server then provides the supplemented electronic message to a service (e.g. a micro-blog application) for display. Alternatively, in response to determining that the received electronic message is not associated with a particular currently broadcast media program, the server provides the received electronic message to the aforementioned service for display.

In some implementations, a method of supplementing an electronic message associated with a particular broadcast media program comprises: at a server including a processor and memory storing programs for execution by the processor: receiving an electronic message including content composed by a user of the client device; determining whether the received electronic message the user-composed content of the received electronic message includes a reference to a currently broadcast media program; generating a corresponding supplemented electronic message from the received electronic message at least in response to determining that the received electronic message includes the reference by adding to the received electronic message at least a displayable indicator of media content from the referenced currently broadcast media program; and providing the supplemented electronic message to a service for display. Generating the corresponding supplemented electronic message includes adding at least a displayable indicator of content from the referenced currently broadcast media program.

In some implementations, the electronic message includes at least one of a micro-post, a social networking message, a chat room message or an instant message.

In some implementations, determining whether the received electronic message includes the reference comprises: assessing the received electronic message based on media program content data stored in the memory and associated with at least one currently broadcast media program to determine whether the received electronic message is associated with a particular currently broadcast media program.

In some implementations, assessing the received electronic message includes: assigning the received electronic message a value indicative of a relation between the received electronic message and a particular currently broadcast media program; determining whether the value satisfies a first threshold; and determining that the received electronic message is associated with the particular currently broadcast media program in response to determining that the value satisfies the first threshold.

In some implementations, the method also includes: determining whether to generate the corresponding supplemental electronic message based at least on the content of the received electronic message.

In some implementations, determining whether to generate the corresponding supplemental electronic message comprises: comparing text from the received electronic message to one or more subtitles from the referenced currently broadcast media program to determine whether the text matches at least one of the one or more subtitles.

In some implementations, comparing text from the received electronic message to one or more subtitles comprises: comparing words of the received electronic message to words of the first subtitle; identifying a number of matches between the words of the received electronic message and the words of the first subtitle; and identifying as a quote the received electronic message when the number of matched words exceeds a predetermined threshold.

In some implementations, comparing words includes determining and selecting a low Hamming distance set.

In some implementations, the first timestamp is indicative of a corresponding moment in the broadcast media program referenced by the received electronic message, and is stored in the memory in relation to the at least one matching subtitle.

In some implementations, the comparison between the text from the electronic message and the one or more subtitles is fault-tolerant.

In some implementations, the one or more subtitles employed in the comparison are limited to one or more subtitles from a particular elapsed duration relative to a time indicator associated with the received electronic message.

In some implementations, the method further includes: identifying a corresponding first timestamp associated with the at least one matching subtitle, in response to determining that the text matches at least one subtitle; and selecting from the memory a screenshot of the currently playing broadcast media program based at least on the first timestamp. The selected screenshot has a respective second timestamp proximate to the first timestamp.

In some implementations, selecting the screenshot is also based on image quality.

In some implementations, the method further includes: acquiring at least one of subtitles and closed-caption data associated with one or more currently broadcast media programs; and updating a search index stored in the memory to include the acquired subtitles or closed-caption data along with corresponding timestamps indicative of the time at which each acquired subtitle or closed-caption data portion was presentable.

In some implementations, the method further includes: acquiring screenshots from one or more broadcast media programs as the one or more broadcast media programs are broadcast, wherein the screenshots are acquired at regular intervals; and updating a search index stored in the memory to include the acquired screenshots along with corresponding timestamps indicative of the time at which each acquired screenshot was presentable.

In some implementations, the method further includes: acquiring video clips from one or more broadcast media programs as the one or more broadcast media programs are broadcast, wherein the video clips are acquired at regular intervals; and updating a search index stored in the memory to include the acquired video clips along with corresponding timestamps indicative of the time at which each acquired video clip was presentable.

In some implementations generating the corresponding supplemental electronic message comprises: identifying content associated with the referenced broadcast media program; and supplementing the received electronic message with at least a displayable indicator of the identified content.

In some implementations, identifying content comprises: comparing text from the received electronic message to one or more subtitles from the referenced currently broadcast media program to determine whether the text matches at least one of the one or more subtitles; and identifying a corresponding first timestamp associated with the at least one matching subtitle, in response to determining that the text matches at least one subtitle.

In some implementations, the first timestamp is indicative of a corresponding moment in the program referenced by the received electronic message, and is stored in the memory in relation to the at least one matching subtitle.

In some implementations, the comparison between the text from the electronic message and the one or more subtitles is fault-tolerant.

In some implementations, the one or more subtitles employed in the comparison are limited to the one or more subtitles from a particular elapsed duration relative to a time indicator associated with the received electronic message.

In some implementations, the displayable indicator includes a quote from one or more of the subtitles.

In some implementations, identifying content further comprises: selecting from the memory a screenshot of the currently playing broadcast media program based at

least on the first timestamp. The selected screenshot has a respective second timestamp proximate to the first timestamp; the displayable indicator includes the selected screenshot.

In some implementations, displayable indicator includes the selected screenshot as a representation for a video clip.

In some implementations, displayable indicator includes the selected screenshot as a representation for a video clip.

A computing system and a non-transitory computer readable storage medium including instructions for executing one or more steps of the above-described methods are also disclosed herein.

### BRIEF DESCRIPTION OF THE DRAWINGS

A more particular description of this disclosure may be had by reference to the features of various implementations, some of which are illustrated in the appended drawings. The appended drawings, however, illustrate only some example features of the present disclosure and are therefore not to be considered limiting, for the description may admit to other effective features.
Figure 1 is a block diagram of an example client-server environment.
Figure 2 is a block diagram of another example client-server environment.
Figure 3 is a block diagram of an example implementation of a server system.
Figure 4 is a schematic diagram of example screenshots according to some implementations.
Figure 5 is a flowchart representation of a server system method.
Figure 6 is a flowchart representation of a server system method.
Figure 7 is a flowchart representation of a server system method.
Figure 8 is a flowchart representation of a server system method.
Figure 9 is a flowchart representation of a server system method.
Figure 10 is a flowchart representation of a server system method.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DETAILED DESCRIPTION

Systems, methods and devices described herein enable users of Internet-enabled devices to share content from broadcast media programs in real-time. In particular, in some implementations systems, methods and devices are operable to supplement electronic messages from viewers about a broadcast media program with content from the program, such as quotes, screenshots, video-snippets, etc. For example, a viewer of a broadcast media program uses a client device (e.g. laptop, tablet computer, Smartphone) to at least transmit an electronic message to a server system. In turn, the server system parses the electronic message received from the client device to determine whether the electronic message is associated with a particular currently broadcast media program. In response to determining that the received electronic message is associated with a particular currently broadcast media program, the server system generates a corresponding supplemented electronic message, from the received electronic message, by including content from the currently broadcast media program. The server system then provides the supplemented electronic message to a service (e.g. a micro-blog application) for display. Alternatively, in response to determining that the received electronic message is not associated with a particular currently broadcast media program, the server system provides the received electronic message to the aforementioned service for display.

Numerous details are described herein in order to provide a thorough understanding of the example implementations illustrated in the accompanying drawings. However, the invention may be practiced without these specific details. And, well-known methods, procedures, components, and circuits have not been described in exhaustive detail so as not to unnecessarily obscure more pertinent aspects of the example implementations.

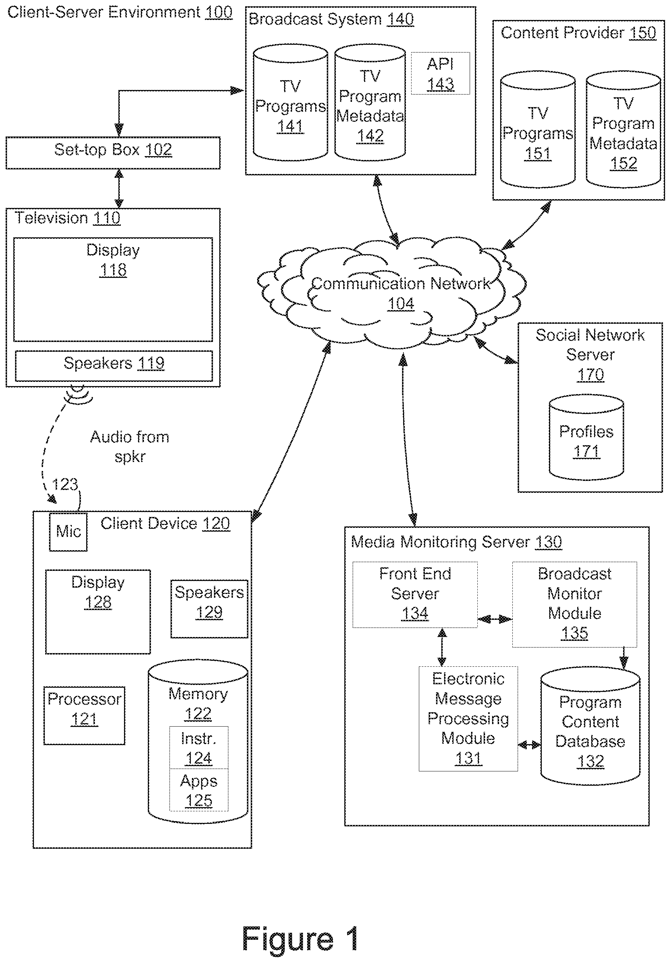

Figure 1 is a block diagram of an example implementation of a client-server environment 100. While certain specific features are illustrated, those skilled in the art will appreciate from the present disclosure that various other features have not been illustrated for the sake of brevity and so as not to obscure more pertinent aspects of the implementations disclosed herein. To that end, the client-server environment 100 includes a set-top box 102, a television (TV) 110, a second screen client device 120 (e.g. a laptop, a tablet computer, Smartphone, etc.), a communication network 104, a media monitoring server 130, a broadcast system 140, a content provider 150, and a social network server 170. The second screen client device 120, the media monitoring server 130, the broadcast system 140, the content provider 150, and the social network server 170 are capable of being connected to the communication network 104 in order to exchange information with one another and/or other devices and systems. Moreover, while Figure 1 only includes one of each of the aforementioned devices and systems, those skilled in the art will appreciate from the present disclosure that any number of such devices and/or systems may be provided in a client-server environment, and in particular some devices may be altogether absent. In other words, the client-server environment 100 is merely an example provided to discuss more pertinent features of the present disclosure.

In some implementations, the media monitoring server 130 is implemented as a single server system, while in other implementations it is implemented as a distributed system of multiple servers. Solely for convenience of explanation, the media monitoring server 130 is described below as being implemented on a single server system. Similarly, in some implementations, the social network server 170 is implemented as a single server system, while in other implementations it is implemented as a distributed system of multiple servers. Solely, for convenience of explanation, the social network server 170 is described below as being implemented on a single server system. Similarly, in some implementations, the broadcast system 140 is implemented as a single server system, while in other implementations it is implemented as a distributed system of multiple servers. Solely, for convenience of explanation, the broadcast system 140 is described below as being implemented on a single server system. Similarly, in some implementations, the content provider 150 is implemented as a single server system, while in other implementations it is implemented as a distributed system of multiple servers. Solely, for convenience of explanation, the content provider 150 is described below as being implemented on a single server system. Moreover, the functionality of the broadcast system 140 and the content provider 150 can be combined into a single server system. Additionally and/or alternatively, while only one broadcast system and only one content provider is illustrated in Figure 1 for the sake of brevity, those skilled in the art will appreciate from the present disclosure that fewer or more of each may be present in an implementation of a client-server environment.

In some implementations, the set-top box 102 and the TV 110 are provided in combination. The set-top box 102 is configured to receive and decode signals including media content from the broadcast system 140 or the like. In some implementations, the set-top box 102 is also Internet-enabled in order to receive signals including media content or the like. In operation, the set-top box 102 decodes the signal received from the broadcast system 140 or the like and provides audio and video content to the TV 110 for display. While a TV has been used in the illustrated example, those skilled in the art will appreciate from the present disclosure that any number of displays devices, including computers, laptop computers, tablet computers, smart-phones and the like, can be used to display a video stream and play the associated audio stream. Additionally and/or alternatively, the functions of the set-top box 102 and the TV 110 may be combined into a single device.

In some implementations, the set-top box 102 is any computer device capable of connecting to the communication network 104, receiving video streams, extracting information from video streams and presenting video streams for the display using the TV 110 (or another display device). In some implementations, the set-top box 102 may be configured as a receiver for cable TV and/or satellite TV, a digital video recorder (DVR), a digital media receiver, a TV tuner, a computer, and/or any other device that outputs TV signals. In some implementations the TV 110 can be a conventional TV display that is not connectable to the Internet and that displays digital and/or analog TV content received via over the air broadcasts or a satellite or cable connection. As is typical of televisions, the TV 110 includes a display 118 and speakers 119.

As used herein, a TV signal is an electrical, optical, or other type of data transmitting medium that includes audio and/or video components corresponding to a TV channel. In some implementations, the TV signal is a terrestrial over-the-air TV broadcast signal or a sign distributed/broadcast on a cable-system or a satellite system. In some implementations, the TV signal is transmitted as data over a network connection. For example, the set-top box 102 can receive video streams from an Internet connection. Audio and video components of a TV signal are sometimes referred to herein as audio signals and video signals. In some implementations, a TV signal corresponds to a TV channel that is being displayed on the TV 110.

The second screen client device 120 may be any computer device that is capable of connecting to one or more communication networks 104, such as a computer, a laptop computer, a tablet device, a netbook, an Internet kiosk, a personal digital assistant, a mobile phone, a gaming device, or any other device that is capable of communicating with the media monitoring server 130. In some implementations, the second screen client device 120 includes one or more processors 121, non-volatile memory 122 such as a hard disk drive, a display 128, speakers 129, and a microphone 123. The second screen client device 120 may also have input devices such as a keyboard, a mouse and/or track-pad (not shown). In some implementations, the second screen client device 120 includes a touch screen display, a digital camera and/or any number of supplemental devices to add functionality.

In some implementations, the second screen client device 120 may be connected to the set-top box 102 via a wireless or wired connection. In some implementations where such connection exists, the second screen client device 120 may optionally operate in accordance with instructions, information and/or digital content (collectively "second screen information") provided by the set-top box 102 (and vice versa). In some implementations, the set-top box 102 issues instructions to the second screen client device 120 that cause the second screen client device 120 to present on the display 128 and/or the speaker 129 digital content that is complementary, or related to, digital content that is being presented by the client 102 on the TV 110.

In some implementations, the second screen client device 120 includes a microphone 123 that enables the client device to receive sound (audio content) from, for example, the speakers 119 of the TV 110. The microphone 123 enables the second screen client device 120 to record the audio content/soundtrack that is associated with the video content as it is presented, so that it may be fingerprinted on the second screen client device 120.

In some implementations, the second screen client device 120 includes one or more applications 125 stored in the memory 122. The processor 121 executes the one or more applications in accordance with a set of instructions received from the media monitoring server 130.

The communication network 104 may be any combination of wired and wireless local area network (LAN) and/or wide area network (WAN), such as an intranet, an extranet, including a portion of the Internet, or a wireless network provided by a wireless carrier. It is sufficient that the communication network 104 provides communication capability between the second screen client device 120 and the media monitoring server 130. In some implementations, the communication network 104 uses the HyperText Transport Protocol (HTTP) to transport information using the Transmission Control Protocol/Internet Protocol (TCP/IP). HTTP permits the client device 120 to access various resources available via the communication network 104. However, the various implementations described herein are not limited to the use of any particular protocol.

In some implementations, the media monitoring server 130 includes a front end server 134 that facilitates communication between the media monitoring server 130 and the communication network 104. The front end server 134 receives electronic messages from the second screen client device 120. As described in greater detail below, in some implementations, an electronic message is at least one of a micro-post, a social networking message, a chat room message, and an instant message; and content information is a video stream, a portion thereof, and/or a reference to a portion thereof. A reference to a portion of a video stream may include a time indicator and/or a digital marker referencing the content of the video stream. In some implementations, the content information is derived from a video stream being presented (i.e. playing) by the combination of the TV 110 and the set-top box 102.

In some implementations, the front end server 134 is configured to send a set of instructions to the second screen client device 120. In some implementations, the front end server 134 is configured to send content files, links to content files and/or metadata associated with the content files. The term "content file" includes any document or content of any format including, but not limited to, a video file, an image file, a music file, a web page, an email message, an SMS message, a content feed, an advertisement, a coupon, a playlist or an XML document. In some implementations, the front end server 134 is configured to send or receive one or more video streams. In some implementations, the front end server 134 is configured to receive content directly from the broadcast system 140 and/or the content provider 150 over the communication network 104.

In some implementations, the media monitoring server 130 includes a broadcast monitor module 135 that is configured to receive and record broadcast media programming, and to create fingerprints of broadcast media programs, capture subtitles and/or closed caption information, and capture screenshots of media content broadcast by the broadcast system 140 and/or the content provider 150. In some implementations, the media monitoring server 130 includes a program content database 132 that stores content fingerprints, subtitle and/or closed caption information, and screenshots. In some implementations, the program content database 132 is a distributed database.

In some implementations, the media monitoring server 130 includes an electronic message processing module 131. In operation, the electronic message processing module 131 receives an electronic message from a client device (e.g. client device 120) via the front end server 134. The electronic message processing module 131 parses the received electronic message to determine if the electronic message is associated with a particular currently broadcast media program, provided for example, by the broadcast system 140 or the content provider 150. For example, the electronic message processing module 131 parses a micro-post or the like in order to determine if the micro-post is related to (i.e. about) a particular sitcom or other television program. In response to determining that received electronic message is associated with a particular currently broadcast media program, the electronic message processing module 131 generates a corresponding supplemented electronic message, from the received electronic message, by including content from the currently broadcast media program retrieved from the program content database 132. The electronic message processing module 131 then provides the supplemented electronic message to a service (e.g., a micro-blog application) for display. For example, the electronic message may be a micro-blog associated with a micro-blog application provided by the social network server 170. As such, instead of receiving and posting the original micro-post from the client device 120, the social network server 170 receives and posts the supplemented micro-post from the media monitoring server 130, which includes content from a particular currently broadcast media program. Alternatively, in response to determining that the received electronic message is not associated with a particular currently broadcast media program, the electronic message processing module 131 provides the received electronic message to the aforementioned service for display (e.g. a micro-post as describe above).

In some implementations, the broadcast system 140 includes media content such as TV programs 141. In other words, the broadcast system 140 includes electronic copies of the media content, such as television programs. In some implementations, the broadcast system 140 also includes metadata 142 associated with one or more of the TV programs 141, and application program interface instructions 143. In some implementations, the application program interface instructions 143 include instructions that can be provided to a client device and/or may be executed by the broadcast system 140 under a client-server model or the like in order to link a particular TV program 141 with the associated metadata 142 and/or link the TV program 141 and the associated metadata 142 with external data and/or services, such as a social networking application. In some implementations, the metadata 142 may include subtitles and/or closed caption information. In some implementations, subtitles and/or closed caption information are embedded in the TV program content 141. Similarly, in some implementations, the content provider 150 additionally and/or alternatively includes media content such as TV programs 151, as well as metadata 152 associated with one or more of the TV programs 151.

In some implementations, the social network server 170 includes profiles 171, which include profiles of users, brands, companies and/or groups. In some implementations, the social network server 170 provides an application that allows a user to post electronic messages that are viewable by other users associated with the posting user.

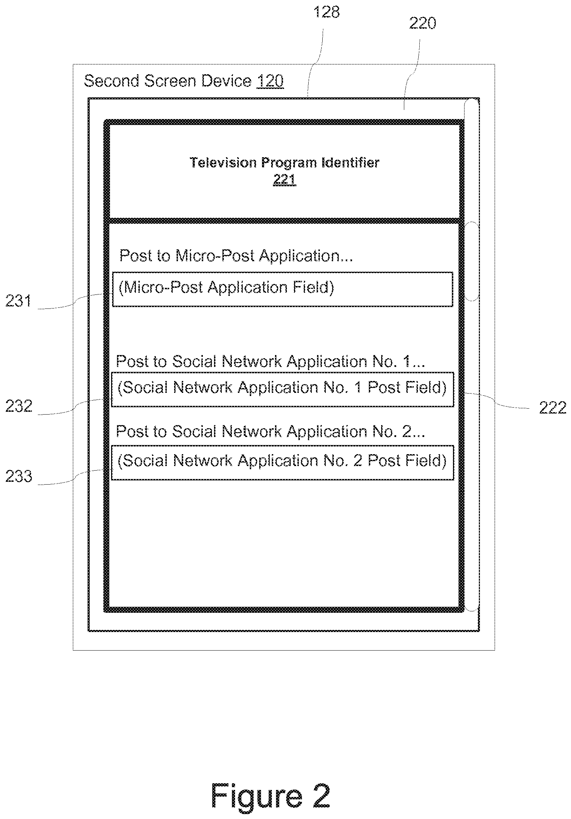

Figure 2 is a schematic diagram of an example screenshot of the second screen client device 120 according to some implementations. The display 128 of the second screen client device 120 displays a user interface 220 of the application for supplementing micro-posts and the like. In some implementations, the user interface 220 is configured to include at least two sections 221 and 222. While two sections are included in the example implementation described with reference to Figure 2, those skilled in the art will appreciate that a fewer or a greater number of sections may be included in a user interface according to various other implementations.

In some implementations, the first section 221 is configured to display an image associated with the television program in order to indicate that the user interface 220 has been synchronized with the television program. For example, the first section 221 may display a recent screenshot (i.e., video frame) from the television program. Additionally and/or alternatively, a logo and/or a promotional image associated with the television program may also be displayed.

In some implementations, the second section 222 is configured to display one or more fields allowing a user to write and post a micro-post to one or more social network applications. For example, the second section 222 includes a micro-post application field 231 in which a user can enter a micro-post message. Additionally, in some implementations, the second section includes first and second post fields 232 and 233, which enable a user to enter a micro-post message for respective first and second social network applications.

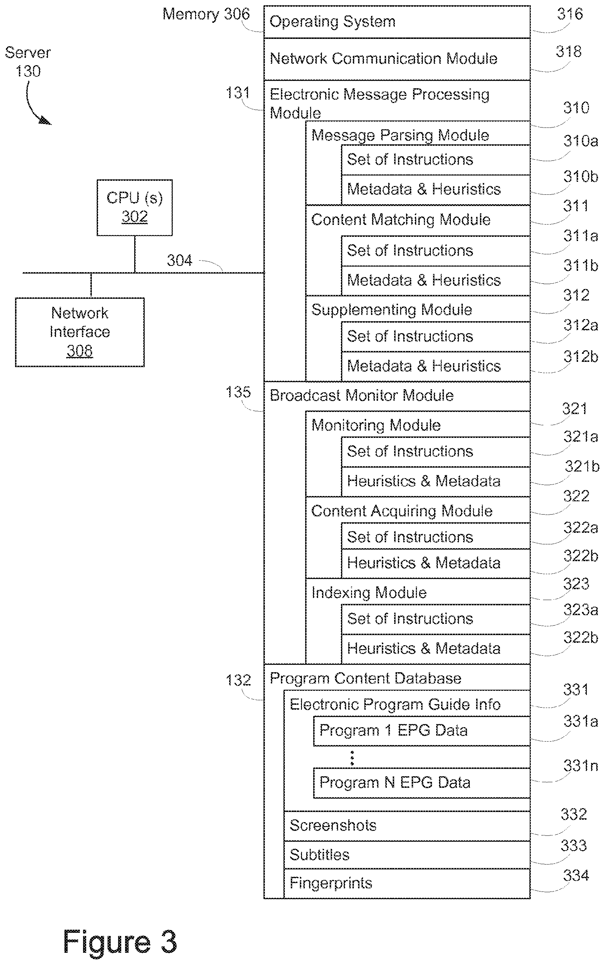

Figure 3 is a block diagram of an example implementation of the media monitoring server 130 discussed above with reference to Figure 1. The media monitoring server 130 illustrated in Figure 3 is similar to and adapted from the media monitoring server 130 illustrated in Figure 1. Elements common to each implementation include common reference numbers, and only the differences between Figures 1 and 3 are described herein for the sake of brevity. Moreover, while certain specific features are illustrated, those skilled in the art will appreciate from the present disclosure that various other features have not been illustrated for the sake of brevity and so as not to obscure more pertinent aspects of the implementations disclosed herein.

To that end, in some implementations, the media monitoring server 130 includes one or more processing units (CPU's) 302, one or more network or other communications interfaces 308, memory 306, and one or more communication buses 304 for interconnecting these and various other components. The communication buses 304 may include circuitry (sometimes called a chipset) that interconnects and controls communications between system components. The memory 306 includes high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. The memory 306 may optionally include one or more storage devices remotely located from the CPU(s) 202. The memory 306, including the non-volatile and volatile memory device(s) within the memory 306, comprises a non-transitory computer readable storage medium. In some implementations, the memory 306 or the non-transitory computer readable storage medium of the memory 306 stores the following programs, modules and data structures, or a subset thereof including an operating system 316, and a network communication module 318.

In some implementations, the memory 306 also includes virtual implementations of one or more of the modules discussed above with respect to Figure 1, namely, the electronic message processing module 131, the broadcast monitor module 135, and the program content database 132. In some implementations, the electronic message processing module 131, the broadcast monitor module 135, and the program content database 132 are each provided in a respective suitable combination of hardware, software and firmware that may be distinct from the memory 306.

The operating system 316 includes procedures for handling various basic system services and for performing hardware dependent tasks.

The network communication module 318 facilitates communication with other devices via the one or more communication network interfaces 308 (wired or wireless) and one or more communication networks, such as the Internet, other wide area networks, local area networks, metropolitan area networks, and so on. With further reference to Figure 1, the network communication module 318 may be incorporated into the front end server 134.

As noted above, the program content database 132 may be configured to store a suitable combination of fingerprints, screenshots and subtitles and/or closed caption information associated with various broadcast media programs, such as, but not limited to, TV programs. For example, the program content database 132 stores electronic program guide information 331, screenshots 332, subtitles (and/or closed caption information) 333, and fingerprints 334 associated with one or more broadcast media programs.

Generally, electronic program guides provide users of TV, radio and/or other media with menus of displayable and/or audible scheduling information for current and upcoming programming. Often, on a per program basis, in addition to program titles, electronic program guides include information about characters, plot lines, hash tags, etc. As such, in some implementations information in electronic program guides may be searched and elements such as keywords and character names stored in the electronic program guide information 331, of the program content data base 132. In some implementations, the associated program content data is indexed on a per program basis. For example, with further reference to Figure 3, the electronic program guide information 331 includes electronic program guide data 331a associated with a first program, and electronic program guide data 331a associated with an *N^{th}* program. Similarly, the stored screenshots 332, subtitles 333, and fingerprints 334 may also be indexed on a per program basis.

As discussed above, in some implementations, the electronic message processing module 131 is configured to utilize the program content database 132 to determine when to supplement electronic messages received from client devices, and add associated content to some of the received electronic messages as determined. To those ends, in some implementations, the electronic message processing module 131 includes a message parsing module 310, a content matching module 311, and a supplementing module 312.

In some implementations, the messaging parsing module 310 assesses a received electronic message (sent by a user from the second screen device) based on media program content data stored in the memory and associated with at least one currently broadcast media program to determine whether the received electronic message is associated with a particular currently broadcast media program. For example, as discussed in greater detail below, an electronic message is analyzed with respect to keywords and other factors in the electronic message, and is assigned a value (e.g., a score) indicative of a relation between the received electronic message and a particular currently broadcast media program based on matching the data from the electronic program guide and/or captured subtitles and/or closed caption data. Some other factors increasing a match score include, but are not limited to, the following. Some broadcasters display a hash tag or the like on-screen during the show (e.g., #DWTS for "Dancing with the Stars). System servers can extract such an indicator by applying optical character recognition (OCR) to the portion of the video stream captured by a client device. A micro-post that is posted during the airing of the program with such an on screen indicator is highly likely to be about the program. For example, micro-posts may include references to actor names, character names, product placements, sights, sounds, locales, etc. As such, a micro-post that refers to both the program name and an actor or some other associated program element, is highly likely to be about the program. The assigned value can be used to gauge the probability that the received electronic message is associated with a particular program that is being broadcast. To that end, the messaging parsing module 310 includes a set of instructions 310a, and heuristics and metadata 310b.

In some implementations, the content matching module 311 determines whether a received electronic message, determined to be associated with a particular broadcast media program, also includes a quote and/or a character reference. For example, as discussed in greater detail below, the presence of a quote is identified by comparing text from the received electronic message to one or more subtitles from the referenced currently broadcast media program to determine whether the text matches at least one of the one or more subtitles. Similarly, the presence of a character reference is identified by comparing character names with the text of the received electronic message. To that end, the content matching module 311 includes a set of instructions 311 a, and heuristics and metadata 311b.

In some implementations, the supplementing module 312 generates a corresponding supplemented electronic message from the received electronic message by adding at least a displayable indicator of content from the referenced currently broadcast media program. For example, the supplementing module 312 retrieves a quote, a screenshot, a thumbnail link to a screenshot, and/or a video clip identifier from the program content database 132, and links the retrieved content item to the received electronic message to generate a supplemented electronic message. To that end, the supplementing module 312 includes a set of instructions 312a, and heuristics and metadata 312b.

In some implementations, the broadcast monitor module 135 is configured to collect information about broadcast media programs from electronic program guides, the broadcast media programs during broadcast, and/or third party sources (e.g., Tribune Media Services). The broadcast monitor module 135 then stores the collected information in the program content database 132. To those ends, in some implementations, the broadcast monitor module 135 includes a monitoring module 321, a content acquiring module 322, and an indexing module 323.

In some implementations, the monitoring module 321 identifies current and upcoming media broadcasts. For example, the monitoring module 321 may search information in electronic program guides and third party sources in order to identify elements such as keywords and character names that are subsequently stored in the electronic program guide information 331, of the program content data base 132. To that end, the monitoring module 321 includes a set of instructions 321a, and heuristics and metadata 321b.

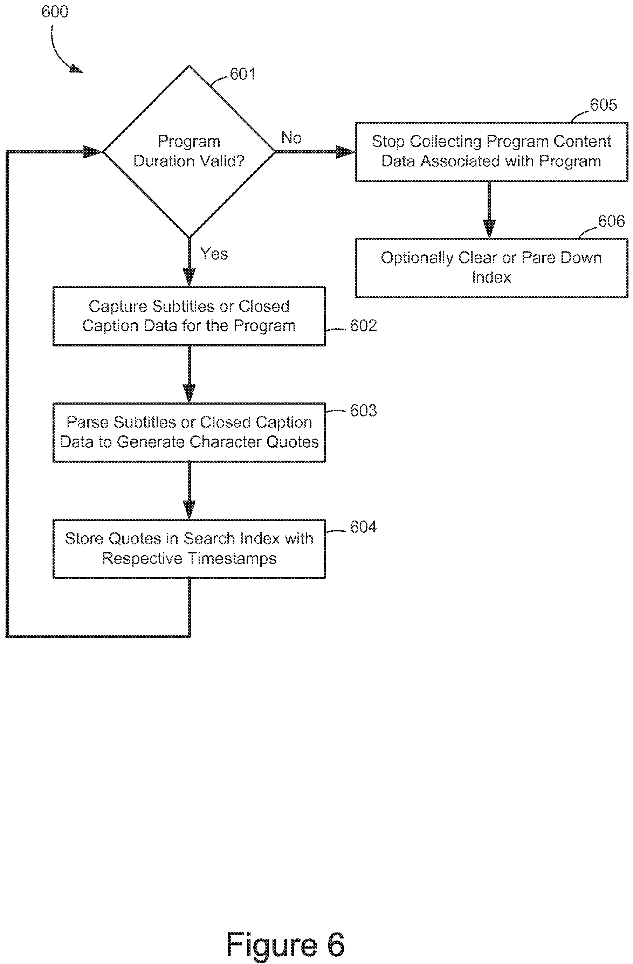

In some implementations, the content acquiring module 322 acquires content associated with currently broadcast media programs during broadcast in order to add content to the program content database 132. To that end, the content acquiring module 322 includes a set of instructions 322a, and heuristics and metadata 322b. Examples of content acquisition are described below with reference to Figures 6-7.

In some implementations, the content indexing module 323 operates to index content, acquired by the content acquiring module 322, into the program content database 132 so that the acquired content can be retrieved for later use. In some implementations, the acquired content is indexed on a per program basis. To that end, the content indexing module 323 includes a set of instructions 323a, and heuristics and metadata 323b.

With continued reference to Figures 1-3, Figure 4 is a schematic diagram of example screenshots of the TV 110 and the second screen client device 120 according to some implementations. The display 118 of the TV 110 displays a television program 502 aired by a television network. Although a TV is illustrated, those skilled in the art will appreciate from the present disclosure that the systems and methods disclosed herein may be used in combination with any media presentation device. The display 128 of the second screen client device 120 displays a user interface 520 of a social networking application for sharing micro-posts associated with the television program 502.

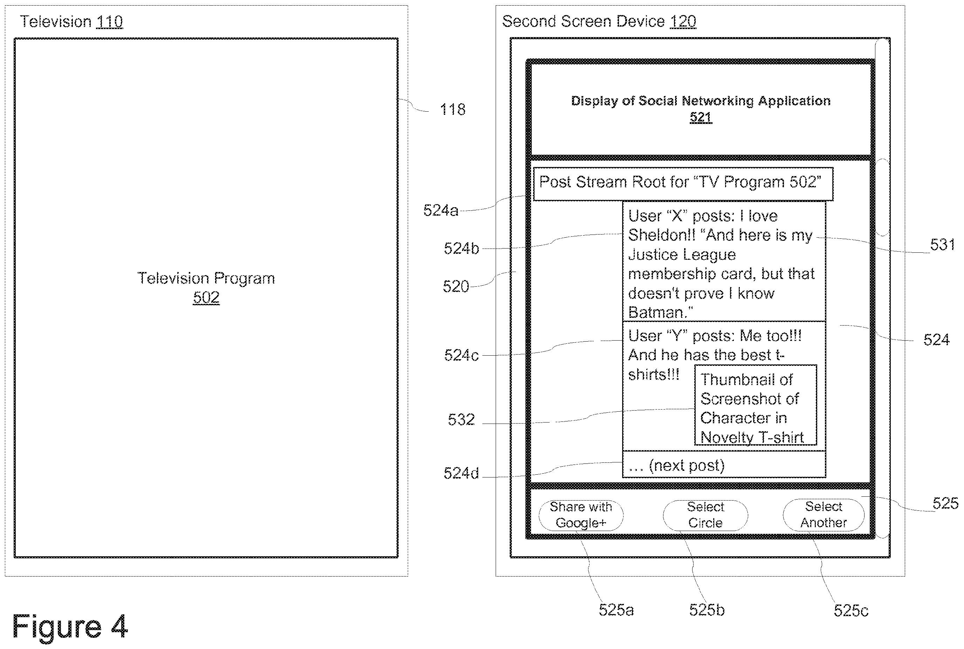

In some implementations, the user interface 520 is configured to include three sections 521, 524, 525. While three sections are included in the example implementation described with reference to Figure 4, those skilled in the art will appreciate that a fewer or a greater number of sections may be included in a user interface according to various other implementations.

In some implementations, the first section 521 is configured to display an image associated with a particular social networking application in order to indicate to the user that the user interface 520 is displaying content specifically associated with the social networking application. For example, the first section 521 may display a logo and/or a promotional image associated with the social networking application.

In some implementations, the second section 524 is configured to display a user interface of the social networking application the user employs to share micro-posts, which may be associated with the television program 502. For example, when the user is interested in the post-stream associated with the television program 502 the second section displays the post stream root 524a associated with the television program. In some implementations, the post stream root 524a may be displayed in response to the user searching for and selecting the post stream root 524a. In some implementations, the post stream root 524a may be displayed in response a client application fingerprinting the television program 502 and requesting the post stream root 524a from a social networking server without engaging the user.

The post stream root 524a may be associated with one or more user micro-posts. In the example depicted in Figure 4, at least three user micro-posts 524b, 524c, 524d are associated with the post stream root 524a. As discussed above, in some implementations, user micro-posts associated with a broadcast media program (e.g., television program 502) are enriched or supplemented prior to display by the social networking service. For example, the first micro-post 524b includes a quote 531. As discussed in greater detail below, an accurate copy of a quote (e.g., quote 531) can be added to a micro-post in response to determining that original micro-post included a user attempt at quoting a character in a television program. Similarly and also discussed in greater detail below, a thumbnail image or a link to an image or video clip can be added to a user micro-post in response to determining that the micro-post includes a reference to the character. For example, the second micro-post 524c includes a thumbnail image of a screenshot of a character referenced by the user micro-post.

In some implementations, the third section 525 is configured to display a number of selectable commands associated with using the social networking application. In some implementations, each selectable command is displayed in an icon or button or the like. For example, as illustrated in Figure 4, the third section 525 includes four selectable command buttons 525a ("Deselect"), 525b ("Share with *Google*+"), 525c ("Share with Other"), 525d ("Select Another"). In some implementations, the selectable commands are commands that have historically been or are expected to be frequently chosen by a significant number of users using the application. In some implementations, the third section 525 is configured to allow a user to select one or more of the selectable commands by at least one of using a peripheral device, such as a mouse or keyboard, and/or by touching the display 128 if it is enabled as a touch-screen display.

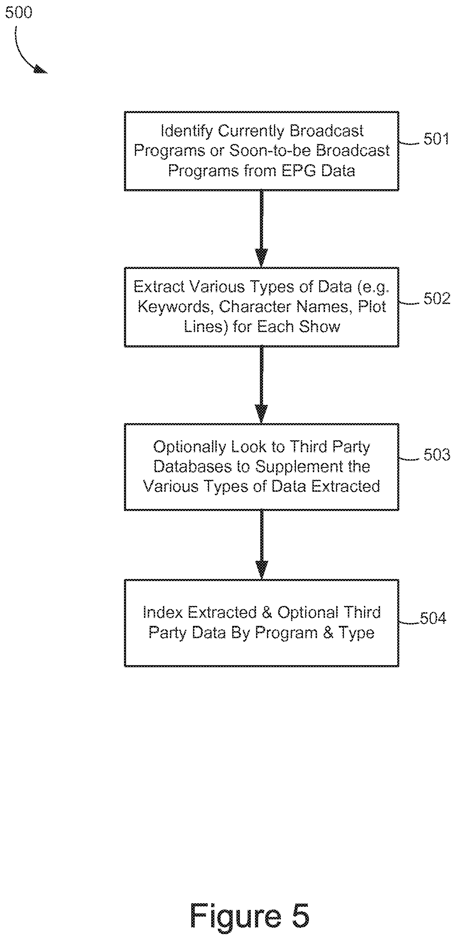

Figure 5 is a flowchart 500 of an example implementation of a server system method. In some implementations, the method is performed by a broadcast monitor module in order to build a search index including various types of data associated with broadcast media programs. The method identifies and stores content data associated with one or more currently and soon-to-be broadcast media programs. For example, the method searches one or more electronic program guides to identify elements such as keywords, character names, plot line information, and hash tags (501). The method also includes extracting the identified information from the one or more electronic program guides (502). Optionally, the method includes searching third party databases to supplement the various types of data extracted from the one or more electronic program guides (503). The method includes indexing the identified and extracted data (504). In some implementations, the data is indexed by program. In some implementations, the data is indexed by channel or by time-slot or another convenient method.

Figure 6 is a flowchart 600 of an example implementation of a server system method. In some implementations, the method is performed by a broadcast monitor module in order to add to a search index including various types of data associated with broadcast media programs. More specifically, the method captures subtitles or closed caption data in real-time during the broadcast of a particular media program (e.g. a television show), and stores the captured subtitles or closed caption data in search index.

To that end, the method includes determining if the program is currently being broadcast (601, i.e., determining whether the program duration is valid). If the program duration is valid (601 - Yes), the method includes capturing subtitles or closed caption data associated with the program. For example, with reference to Figures 1-2, the broadcast monitor module 135 operates to receive and parse video streams and associated data (including, for example, closed caption data) as it is broadcast. The method also includes parsing the captured subtitle and/or closed caption data to generate quotes attributable to specific characters (603). In other words, the captured subtitles and/or closed caption data are sorted by character in order to allow selection of quotes by character. The method then includes storing the quotes in a search index with respective timestamps associated with each quote (604). The timestamps are each indicative of a corresponding moment in the program during which the quote was audible to users.

On the other hand, when the program is over, (601 - No), the method includes ceasing to collect content data associated with the particular program (605), because the program broadcast has ended. Optionally, the method includes clearing or paring down the search index to remove unused quotes and/or other data (606) to free memory space.

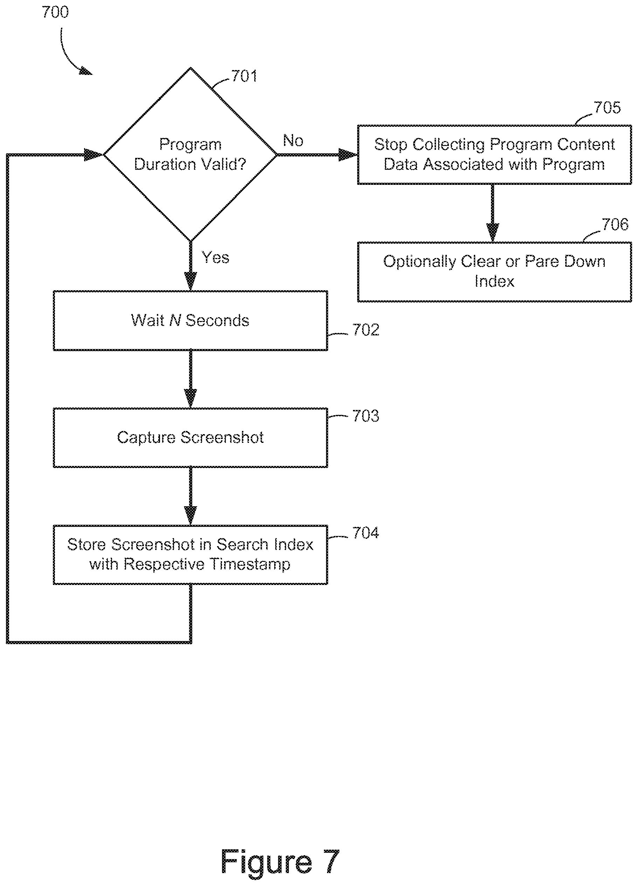

Figure 7 is a flowchart 700 of an example implementation of a server system method. In some implementations, the method is performed by a broadcast monitor module in order to add to a search index including various types of data associated with broadcast media programs. More specifically, the method captures screenshots in real-time during the broadcast of a particular media program (e.g., a television show), and stores the captured screenshots in search index.

To that end, the method includes determining if the program is currently being broadcast (701, i.e., determining whether the program duration is valid). If the program duration is valid (701 - Yes), the method includes waiting a preset amount of time to ensure that there is a noticeable difference between screen shots (702). The method then includes capturing a screenshot after the preset delay (703), and saving the screenshot in the search index with a respective timestamp. For example, with reference to Figures 1-2, the broadcast monitor module 135 operates to receive video streams and associated data as it is broadcast, and every N seconds the broadcast monitor module 135 saves a screenshot from a video stream to program content database 132. The timestamps are each indicative of a corresponding moment in the program during which the screenshot was visible to users.

On the other hand, when the program is over, (701 - No), the method includes ceasing to collect content data associated with the particular program (705), because the program broadcast has ended. Optionally, the method includes clearing or paring down the search index to remove unused screenshots and/or other data (706) to free memory space.

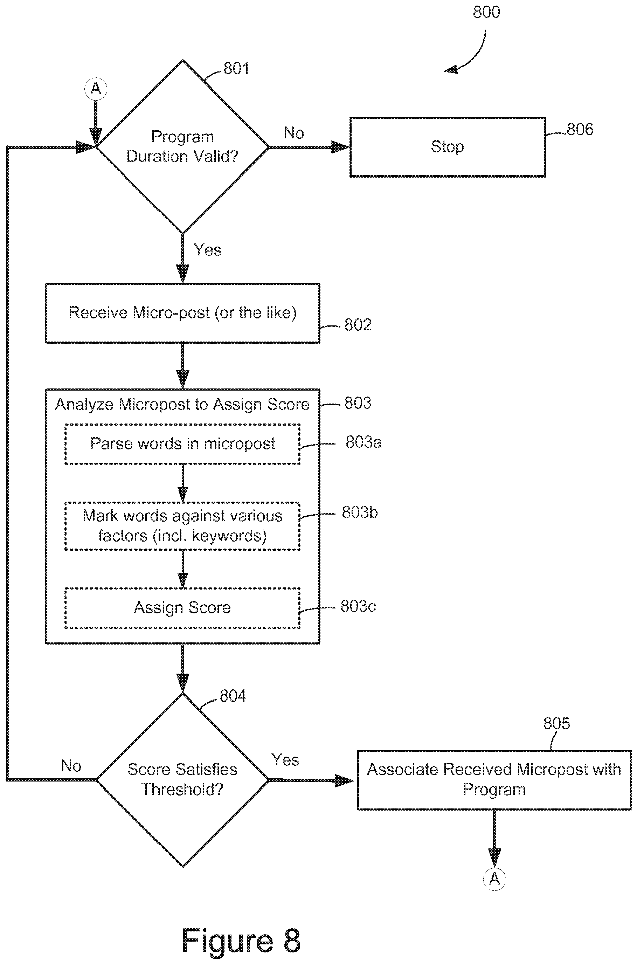

Figure 8 is a flowchart 800 of an example implementation of a server system method. In some implementations, the method is performed by an electronic message processing module in order to determine whether an electronic message is related to a currently broadcast media program. More specifically, the method assesses a received electronic message based on media program content data stored in the memory and associated with at least one currently broadcast media program to determine whether the received electronic message is associated with a particular currently broadcast media program.

To that end, the method includes determining if the program is currently being broadcast (801, i.e., determining whether the program duration is valid). If the program duration is valid (801 - Yes), the method includes receiving a micro-post (or the like) to determine whether or not the received micro-post is related to the particular program (802). On the other hand, when the program is over, (801 - No), the method includes ceasing to determine whether or not received micro-posts are related to the particular program (806), because the program broadcast has ended. In some implementations, a time margin is appended at the end of the program time to allow for posts about the show immediately after the show has ended. For example, people of comment on a program within the 30 minutes of the program ending.

However, during the duration of the program, the method includes analyzing received micro-posts so that each micro-post may be assigned a value indicative of a relation between the received electronic message and a particular currently broadcast media program (803). More specifically, analysis of a received micro-post includes parsing the words of the received micro-post (803a), marking the words against various factors (803b), and assigning the received micro-post a score based on the how the words of the micro-post relate to the various factors (803c).

For example, filtering may include any one of the following, without limitation. In some implementations, a micro-post is matched against program titles (e.g., "Mad Men", "Archer", "Morning Drive", "House Hunters", etc.). In some implementations, a micro-post is matched against one or more secondary titles associated with respective program titles (e.g., "Star Wars: Return of the Jedi" can be matched against micro-posts containing both "Star Wars" and "Return of the Jedi"). In some implementations, a micro-post is matched against shortened or paraphrased program titles. In some implementations, a micro-post is matched against one or more of character names, actor names, host names, guest names, etc. in the program. In some implementations, a micro-post is matched against a hash tag or the like displayed by the broadcaster or content creator. In some implementations, a micro-post is matched against a user handle (e.g., of the form "@user") displayed by a broadcaster or content creator, which may belong to one or more of an advertiser, a character, an actor, a host and/or a guest on the program. In some implementations, a micro-post is matched against program description data extracted from electronic program data.

By contrast, there are also terms that have a negative impact on a match score for a micro-post. For example, in some implementations, commonly occurring words (e.g., "today") have a negative impact on a match score because they do not tend to limit search results. Additionally and/or alternatively, in some implementations, a micro-post including too little text in addition to the program name may have a negative impact on a match score (e.g., "I am watching the tonight show").

Once the micro-post has been scored, the method includes determining whether or not the score satisfies a threshold (804). If the score satisfies a threshold (804 - Yes), the method includes associating the received micro-post with the program. In turn, as discussed in greater detail below, the received micro-post is analyzed to determine whether or not to enrich or supplement the received micro-post. Subsequently, the method includes receiving and analyzing additional micro-posts for the duration of the program. On the other hand if the score does not satisfy the threshold (804 - No), the method includes receiving and analyzing additional micro-posts for the duration of the program.

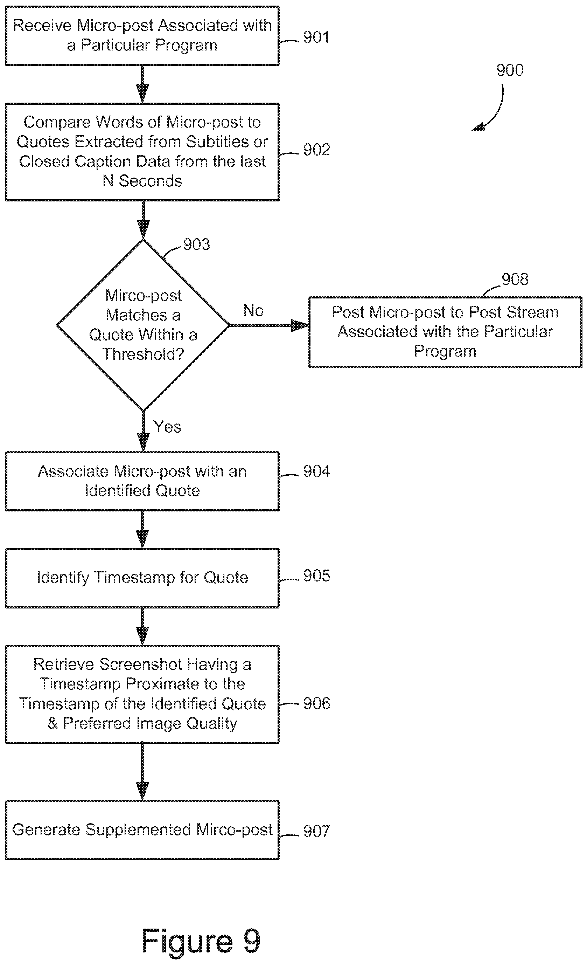

Figure 9 is a flowchart 900 representation of an example implementation of a server system method. In some implementations, the method is performed by an electronic message processing module in order to enable the sharing and viewing of user comments related to the television program displayed by the television network. More specifically, the method analyzes a micro-post associated with a particular broadcast media program to determine whether or not enrich or supplement the micro-post with program content data.

To that end, the method includes receiving a micro-post associated with a particular program (901). In some implementations, as discussed above with reference to Figure 8, a related method is used to determine whether or not a received micro-post is associated with a particular program. In some implementations, the method includes parsing the received micro-post to look for an identifier (e.g., a flag or data field) associated with a particular program.

For each received micro-post associated with a particular program, the method includes comparing the words of the micro-post to quotes extracted from subtitles or closed caption data (902). In some implementations, the one or more subtitles employed in the comparison are limited to one or more subtitles from a particular elapsed duration relative to a time indicator associated with the received electronic message (e.g., the last N seconds). The method then includes determining whether word in the micro-post match a particular quote within a threshold (903). In other words, the comparison is fault-tolerant so as to account for factors such as spelling mistakes, grammar, and inadvertent paraphrasing. If the micro-post does not match a quote within the threshold (903 - No), the method includes posting the received micro-post to the post stream associated with the particular program (908).

On the other hand, if the micro-post matches a quote (903 - Yes), the method includes associating the micro-post with the identified quote (904). The method includes identifying the timestamp of the quote (905), and optionally retrieving a screenshot having a respective timestamp proximate the timestamp of the quote (906). In some implementations, additional logic may be applied to improve the quality of the enrichment data. For example, in addition to identifying the timestamp of the subtitle that matches the quote from the micro-post, the sentence and/or collection of sentences that includes the quoted words in identified and extracted as a whole. In some instances, this may provide more information from which the context of a micro-post can be understood.

Additionally and/or alternatively, some programs have richer subtitles where the speech of different people is indicated with different-colored subtitles. For such programs, instead of going back to the beginning of the sentence, it is possible to go back to the beginning of the group of sentences uttered by one specific on-screen character, to give users more information to understand the context of a micro-post.

In some implementations, selecting the screenshot is also based on image quality. In other words, the method includes assessing and selecting the screenshot with the best available quality that is proximate the timestamp of the quote. For example, one way of determining screenshot quality is detecting screenshots where an actor's face is visible. A range of times may be preset to limit how different the timestamp of a selectable screenshot can be in relation to the timestamp of the quote. Having identified the pertinent program content data available, the method includes generating a supplemented micro-post by adding at least a displayable indicator of content from the referenced currently broadcast media program to the received micro-post. In some implementations, generating the supplemented micro-post may include replacing a portion of the received micro-post with program content data. For example, a paraphrased quote in a micro-post may be replaced with an accurate quote from the program.

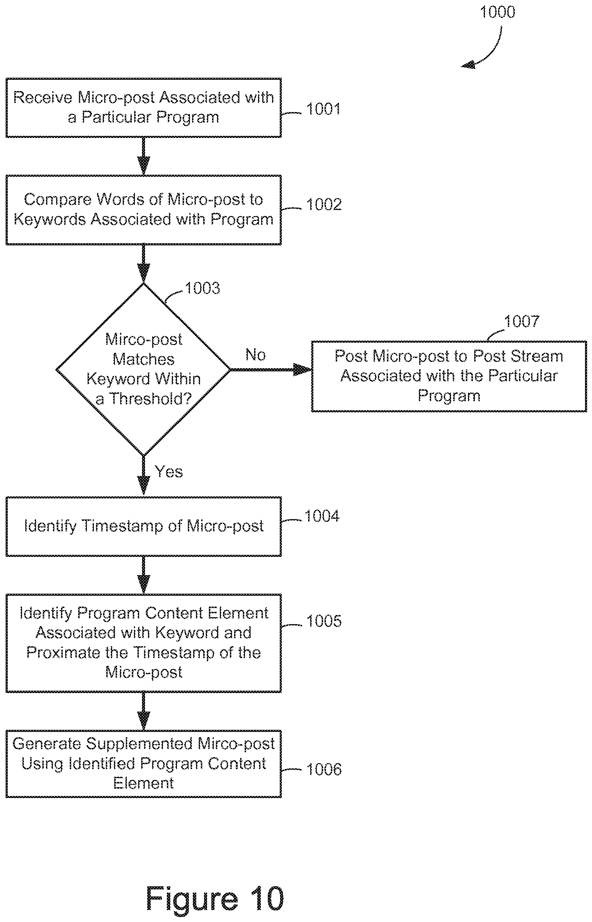

Figure 10 is a flowchart 100 of an example implementation of a server system method. In some implementations, the method is performed by an electronic message processing module in order to enable the sharing and viewing of user comments related to the television program displayed by the television network. More specifically, the method analyzes a micro-post associated with a particular broadcast media program to determine whether or not enrich or supplement the micro-post with program content data.

To that end, the method includes receiving a micro-post associated with a particular program (1001). In some implementations, as discussed above with reference to Figure 8, a related method is used to determine whether or not a received micro-post is associated with a particular program. In some implementations, the method includes parsing the received micro-post to look for an identifier (e.g., a flag or data field) associated with a particular program.

For each received micro-post associated with a particular program, the method includes comparing the words of the micro-post to keywords or key-phrases extracted from electronic program guides or the like (1002). The method then includes determining whether word in the micro-post match a particular keyword or key-phrase within a threshold (1003). In other words, the comparison is fault-tolerant so as to account for factors such as spelling mistakes, grammar, and inadvertent paraphrasing. If the micro-post does not match a keyword or key-phrase within the threshold (1003 - No), the method includes posting the received micro-post to the post stream associated with the particular program (1007).

On the other hand, if the micro-post matches a keyword or key-phrase (1003 - Yes), the method includes identifying the timestamp of the micro-post (1004). For example, a micro-post may include a data field with a timestamp, or the timestamp may be time at which the micro-post was received by the server system. The method includes retrieving a program content element (e.g., a screenshot or video-clip) having a respective timestamp proximate the timestamp of the micro-post (1005). In some implementations, selecting the screenshot is also based on image quality. In other words, the method includes assessing and selecting the screenshot with the best available quality that is proximate the timestamp of the micro-post. A range of times may be preset to limit how different the timestamp of a selectable screenshot can be in relation to the timestamp of the micro-post. Having identified the pertinent program content data available, the method includes generating a supplemented micro-post by adding at least a displayable indicator of content from the referenced currently broadcast media program to the received micro-post (1006).

A content fingerprint includes any type of condensed or compact representation, or signature, of the content of a video stream and/or audio stream. In some implementations, a fingerprint may represent a clip (such as several seconds, minutes, or hours) of a video stream or audio stream. Or, a fingerprint may represent a single instant of a video stream or audio stream (e.g., a fingerprint of single frame of a video or of the audio associated with that frame of video). Furthermore, since video content may change over time, corresponding fingerprints of that video content may also change over time.

Various aspects of embodiments within the scope of the appended claims are described below. It should be apparent that the aspects described herein may be embodied in a wide variety of forms and that any specific structure and/or function described herein is merely illustrative. Based on the present disclosure one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

It will also be understood that, although the terms "first," "second," etc. may be used herein to describe various elements, these elements should not be limited by these terms. These terms are only used to distinguish one element from another. For example, a first contact could be termed a second contact, and, similarly, a second contact could be termed a first contact, which changing the meaning of the description, so long as all occurrences of the "first contact" are renamed consistently and all occurrences of the second contact are renamed consistently. The first contact and the second contact are both contacts, but they are not the same contact.

The terminology used herein is for the purpose of describing particular embodiments only and is not intended to be limiting of the claims. As used in the description of the embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method of supplementing an electronic message associated with a particular broadcast media program, the method comprising:
at a server(130) including a processor (302) and a memory (306) storing programs for execution by the processor:
receiving an electronic message from a client device including content composed by a user of the client device (802);
determining whether the user-composed content of the received electronic message includes a reference to a currently broadcast media program (803, 804);
in response to determining that the user-composed content of the received electronic message includes a reference to a currently broadcast media program, generating a corresponding supplemented electronic message from the received electronic message by adding to the received electronic message at least a displayable indicator of media content from the referenced currently broadcast media program (907, 1006); and
providing the supplemented electronic message to a service for display.

2. The method of claim 1, wherein the electronic message includes at least one of a micro-post, a social networking message, a chat room message or an instant message and the service is a social networking service.

3. The method of claim 1 or 2, wherein determining whether the user-composed content of the received electronic message includes the reference comprises:
assessing the user-composed content of the received electronic message based on media program content data stored in the memory and associated with at least one currently broadcast media program.

4. The method of claim 3, wherein assessing the user-composed content of the received electronic message includes:
comparing the user-composed content of the received electronic message to media content data associated with the at least one currently broadcast media program (803b);
assigning the received electronic message a value indicative of degree of a relation between the received electronic message and a particular currently broadcast media program (803c);
determining whether the value satisfies a first threshold (804); and
determining that the received electronic message is associated with the particular currently broadcast media program in response to determining that the value satisfies the first threshold (805).

5. The method of any preceding claim, further comprising:
determining whether to generate the corresponding supplemental electronic message based at least on the user-composed content of the received electronic message.

6. The method of claim 5, wherein determining whether to generate the corresponding supplemental electronic message comprises:
comparing text the user-composed content from the received electronic message to one or more subtitles from the referenced currently broadcast media program to determine whether the text matches at least one of the one or more subtitles (903, 903); and
identifying a corresponding first timestamp associated with the at least one matching subtitle in response to determining that the text matches at least one subtitle (905).

7. The method of claim 6, wherein the one or more subtitles employed in the comparison are limited to one or more subtitles from a particular elapsed duration relative to a time indicator associated with the received electronic message.

8. The method of claim 6 or 7, further comprising:
selecting from the memory a screenshot of the currently playing broadcast media program based at least on the first timestamp, wherein the selected screenshot has a respective second timestamp proximate to the first timestamp (906).

9. The method of any preceding claim, further comprising:
acquiring at least one of subtitles and closed-caption data associated with one or more currently broadcast media programs (602); and
updating a search index stored in the memory to include the acquired subtitles or closed-caption data along with corresponding timestamps indicative of the time at which each acquired subtitle or closed-caption data portion was presentable (604).

10. The method of any preceding claim, further comprising:
acquiring screenshots from one or more broadcast media programs as the one or more broadcast media programs are broadcast, wherein the screenshots are acquired at regular intervals (702, 703); and
updating a search index stored in the memory to include the acquired screenshots along with corresponding timestamps indicative of the time at which each acquired screenshot was presentable (704).

11. The method of any preceding claim, further comprising:
acquiring video clips from one or more broadcast media programs as the one or more broadcast media programs are broadcast, wherein the video clips are acquired at regular intervals; and
updating a search index stored in the memory to include the acquired video clips along with corresponding timestamps indicative of the time at which each acquired video clip was presentable.

12. The method of any preceding claim, wherein generating the corresponding supplemental electronic message comprises:
identifying content associated with the referenced broadcast media program;
supplementing the received electronic message with at least a displayable indicator of the identified content, wherein identifying the content comprises:
comparing text the user-composed content from the received electronic message to one or more subtitles from the referenced currently broadcast media program to determine whether the text the user-composed content matches at least one of the one or more subtitles; and
identifying a corresponding first timestamp associated with the at least one matching subtitle, in response to determining that the text the user-composed content matches at least one subtitle.

13. The method of claim 12, wherein the one or more subtitles employed in the comparison are limited to the one or more subtitles from a particular elapsed duration relative to a time indicator associated with the received electronic message.

14. The method of claim 12 or 13, wherein the displayable indicator includes a quote from one or more of the subtitles.

15. A computing system for supplementing an electronic message associated with a particular broadcast media program, comprising:
one or more processors (302);
memory (306); and
one or more programs, wherein the one or more programs are stored in the memory and configured to be executed by the one or more processors, the one or more programs including instructions for performing all the steps of the method of any preceding claim.

16. A computer program product comprising instructions which, when the program is executed by a computer, cause the computer to carry out all the steps of the method of any of claims 1-14.

## Patentansprüche

1. Verfahren zum Ergänzen einer mit einem bestimmten Rundfunkmedienprogramm assoziierten elektronischen Nachricht, das Verfahren umfassend:
auf einem Server (130), beinhaltend einen Prozessor (302) und einen Speicher (306), auf dem Programme zur Ausführung durch den Prozessor gespeichert sind:
Empfangen einer elektronischen Nachricht von einem Client-Gerät, die Inhalt beinhaltet, der von einem Benutzer des Client-Geräts (802) zusammengestellt wurde;
Ermitteln, ob der von dem Benutzer zusammengestellte Inhalt der empfangenen elektronischen Nachricht eine Bezugnahme auf ein gegenwärtig ausgestrahltes Medienprogramm (803, 804) beinhaltet;
in Reaktion auf das Ermitteln, dass der von dem Benutzer zusammengestellte Inhalt der empfangenen elektronischen Nachricht eine Bezugnahme auf ein gegenwärtig ausgestrahltes Medienprogramm beinhaltet, Erzeugen einer entsprechenden ergänzten elektronischen Nachricht aus der empfangenen elektronischen Nachricht durch Hinzufügen von zumindest einem anzeigbaren Indikator von Medieninhalt aus dem referenzierten gegenwärtig ausgestrahlten Medienprogramm (907, 1006) zu der empfangenen elektronischen Nachricht; und
Bereitstellen der ergänzten elektronischen Nachricht an einen Dienst zur Anzeige.

2. Verfahren nach Anspruch 1, wobei die elektronische Nachricht zumindest eines aus einem Micro-Post, einer Nachricht von einem sozialen Netzwerk, einer Chatroom-Nachricht oder einer Sofortnachricht beinhaltet, und der Dienst ein sozialer Netzwerkdienst ist.

3. Verfahren nach Anspruch 1 oder 2, wobei das Ermitteln, ob der von dem Benutzer zusammengestellte Inhalt der empfangenen elektronischen Nachricht die Bezugnahme beinhaltet, umfasst:
Bewerten des von dem Benutzer zusammengestellten Inhalts der empfangenen elektronischen Nachricht basierend auf im Speicher gespeicherten und mit zumindest mit einem aktuell ausgestrahlten Medienprogramm assoziierten Inhaltsdaten des Medienprogramms.

4. Verfahren nach Anspruch 3, wobei das Bewerten des von dem Benutzer zusammengestellten Inhalts der empfangenen elektronischen Nachricht Folgendes beinhaltet:
Vergleichen des von dem Benutzer zusammengestellten Inhalts der empfangenen elektronischen Nachricht mit mit dem zumindest einen gegenwärtig ausgestrahlten Medienprogramm assoziierten Medieninhaltsdaten (803b);
Zuweisen eines Wertes an die empfangene elektronische Nachricht, der indikativ für den Grad einer Beziehung zwischen der empfangenen elektronischen Nachricht und einem bestimmten gegenwärtig ausgestrahlten Medienprogramm (803c) ist;
Ermitteln, ob der Wert einen ersten Schwellenwert (804) erfüllt; und
Ermitteln, dass die empfangene elektronische Nachricht mit dem bestimmten gegenwärtig ausgestrahlten Medienprogramm assoziiert ist, in Reaktion auf das Ermitteln, dass der Wert den ersten Schwellenwert (805) erfüllt.

5. Verfahren nach einem der vorhergehenden Ansprüche, ferner umfassend:
Ermitteln, ob die entsprechende ergänzende elektronische Nachricht erzeugt werden soll, basierend zumindest auf dem von dem Benutzer zusammengestellten Inhalt der empfangenen elektronischen Nachricht.

6. Verfahren nach Anspruch 5, wobei das Ermitteln, ob die entsprechende ergänzende elektronische Nachricht erzeugt werden soll, umfasst:
Vergleichen von Text des von dem Benutzer zusammengestellten Inhalts aus der empfangenen elektronischen Nachricht mit einem oder mehreren Untertiteln aus dem referenzierten, gegenwärtig ausgestrahlten Medienprogramm, um zu ermitteln, ob der Text mit zumindest einem des einen oder der mehreren Untertitel (903, 903) übereinstimmt; und
Identifizieren eines entsprechenden ersten Zeitstempels, der mit dem zumindest einen übereinstimmenden Untertitel assoziiert ist, in Reaktion auf das Ermitteln, dass der Text mit zumindest einem Untertitel (905) übereinstimmt.

7. Verfahren nach Anspruch 6, wobei der eine oder die mehreren bei dem Vergleich verwendeten Zeitstempel auf einen oder mehrere Untertitel von einer bestimmten verstrichenen Zeitdauer in Bezug auf einen mit der empfangenen elektronischen Nachricht assoziierten Zeitindikator beschränkt sind.

8. Verfahren nach Anspruch 6 oder 7, ferner umfassend:
Auswählen, aus dem Speicher, eines Screenshot des gegenwärtig wiedergegebenen Rundfunkmedienprogramms basierend zumindest auf dem ersten Zeitstempel, wobei der ausgewählte Screenshot einen entsprechenden zweiten Zeitstempel in unmittelbarer Nähe zu dem ersten Zeitstempel (906) aufweist.

9. Verfahren nach einem der vorhergehenden Ansprüche, ferner umfassend:
Erfassen zumindest eines aus Untertiteln und Closed-Caption-Daten, die mit einem oder mehreren gegenwärtig ausgestrahlten Medienprogrammen (602) assoziiert sind; und
Aktualisieren eines im Speicher gespeicherten Suchindexes, um die erfassten Untertitel oder Closed-Caption-Daten zusammen mit entsprechenden Zeitstempeln, die indikativ für den Zeitpunkt sind, zu dem jeder erfasste Untertitel oder Closed-Caption-Datenabschnitt darstellbar (604) war, einzubeziehen.

10. Verfahren nach einem der vorhergehenden Ansprüche, ferner umfassend:
Erfassen von Screenshots von einem oder mehreren Rundfunkmedienprogrammen, während das eine oder die mehreren Rundfunkmedienprogramme ausgestrahlt werden, wobei die Screenshots in regelmäßigen Abständen (702, 703) aufgenommen werden; und
Aktualisieren eines im Speicher gespeicherten Suchindexes, um die erfassten Screenshots zusammen mit entsprechenden Zeitstempeln, die indikativ für den Zeitpunkt sind, zu dem jeder erfasste Screenshot darstellbar (704) war, einzubeziehen.

11. Verfahren nach einem der vorhergehenden Ansprüche, ferner umfassend:
Erfassen von Video-Clips von einem oder mehreren Rundfunkmedienprogrammen, während das eine oder die mehreren Rundfunkmedienprogramme ausgestrahlt werden, wobei die Video-Clips in regelmäßigen Abständen erfasst werden; und
Aktualisieren eines im Speicher gespeicherten Suchindexes, um die erfassten Video-Clips zusammen mit entsprechenden Zeitstempeln, die indikativ für den Zeitpunkt sind, zu dem jeder erfasste Video-Clip darstellbar war, einzubeziehen.

12. Verfahren nach einem der vorhergehenden Ansprüche, wobei das Erzeugen der entsprechenden ergänzenden elektronischen Nachricht umfasst:
Identifizieren von mit dem referenzierten Rundfunkmedienprogramm assoziierten Inhalt; Ergänzen der empfangenen elektronischen Nachricht mit zumindest einem anzeigbaren Indikator für den identifizierten Inhalt, wobei das Identifizieren des Inhalts umfasst:
Vergleichen von Text des von dem Benutzer zusammengestellten Inhalts aus der empfangenen elektronischen Nachricht mit einem oder mehreren Untertiteln aus dem referenzierten, gegenwärtig ausgestrahlten Medienprogramm, um zu ermitteln, ob der Text des von dem Benutzer zusammengestellten Inhalts mit zumindest einem des einen oder der mehreren Untertitel übereinstimmt; und
Identifizieren eines entsprechenden ersten Zeitstempels, der mit dem zumindest einen übereinstimmenden Untertitel assoziiert ist, in Reaktion auf das Ermitteln, dass der Text des von dem Benutzer zusammengestellten Inhalts mit zumindest einem Untertitel übereinstimmt.

13. Verfahren nach Anspruch 12, wobei der eine oder die mehreren bei dem Vergleich verwendeten Zeitstempel auf den einen oder die mehreren Untertitel von einer bestimmten verstrichenen Zeitdauer in Bezug auf einen mit der empfangenen elektronischen Nachricht assoziierten Zeitindikator beschränkt sind.

14. Verfahren nach Anspruch 12 oder 13, wobei der anzeigbare Indikator ein Zitat aus einem oder mehreren der Untertitel beinhaltet.

15. Rechensystem zum Ergänzen einer mit einem bestimmten Rundfunkmedienprogramm assoziierten elektronischen Nachricht, umfassend:
einen oder mehrere Prozessoren (302);
einen Speicher (306); und
ein oder mehrere Programme, wobei das eine oder die mehreren Programme im Speicher gespeichert und zum Ausführen durch den einen oder die mehreren Prozessoren konfiguriert sind, wobei das eine oder die mehreren Programme Anweisungen zum Ausführen aller Schritte des Verfahrens nach einem der vorhergehenden Ansprüche beinhalten.

16. Computerprogrammprodukt, umfassend Anweisungen, die bei Ausführung des Programms durch einen Computer den Computer veranlassen, alle Schritte des Verfahrens nach einem der Ansprüche 1-14 auszuführen.

## Revendications

1. Procédé de complétion d'un message électronique associé à un programme média diffusé privé, le procédé comprenant :
sur un serveur (130) incluant un processeur (302) et une mémoire (306) le stockage de programmes pour l'exécution par le processeur
la réception d'un message électronique à partir d'un dispositif client, incluant le contenu composé par un utilisateur du dispositif client (802) ;
la détermination de si le contenu composé par un utilisateur du message électronique reçu inclut une référence à un programme média diffusé actuellement (803, 804) ;
en réponse à la détermination que le contenu composé par un utilisateur du message électronique reçu inclut une référence à un programme média diffusé actuellement, la génération d'un message électronique complété correspondant à partir du message électronique reçu par l'ajout au message électronique reçu d'au moins un indicateur affichable du contenu média à partir du programme média diffusé actuellement (907, 1006) ; et
la fourniture du message électronique complété à un service pour affichage.

2. Procédé selon la revendication 1, dans lequel le message électronique inclut au moins un d'un micromessage, un message de réseau social, un message de salle de chat ou un message instantané et le service est un service de réseau social.

3. Procédé selon la revendication 1 ou 2, dans lequel la détermination de si le contenu composé par un utilisateur du message électronique reçu inclut la référence comprend :
l'évaluation du contenu composé par un utilisateur du message électronique reçu sur base de données de contenu de programme média stockées dans la mémoire et associées à au moins un programme média diffusé actuellement.

4. Procédé selon la revendication 3, dans lequel l'évaluation du contenu composé par un utilisateur du message électronique reçu inclut :
la comparaison du contenu composé par un utilisateur du message électronique reçu aux données de contenu média associées à l'au moins un programme média diffusé actuellement (803b) ;
l'attribution du message électronique reçu à une valeur indicative du degré d'une relation entre le message électronique reçu et un programme média actuellement diffusé privé (803c) ;
la détermination de si la valeur satisfait un premier seuil (804) ; et
la détermination que le message électronique reçu est associé au programme média actuellement diffusé privé en réponse à la détermination que la valeur satisfait au premier seuil (805).

5. Procédé selon l'une quelconque des revendications précédentes, comprenant en outre :
la détermination de s'il faut générer le message électronique supplémentaire correspondant sur base au moins du contenu composé par un utilisateur du message électronique reçu.

6. Procédé selon la revendication 5, dans lequel la détermination de s'il faut générer le message électronique supplémentaire correspondant comprend :
la comparaison du texte composé par un utilisateur à partir du message électronique reçu avec un ou plusieurs sous-titres à partir du programme média actuellement diffusé référencé pour déterminer si le texte correspond à au moins un du ou des sous-titres (903, 903) ; et
l'identification d'un premier horodateur correspondant associé à l'au moins un sous-titre correspondant en réponse à la détermination que le texte correspond à au moins un sous-titre (905) .

7. Procédé selon la revendication 6, dans lequel le ou les sous-titres employés dans la comparaison sont limités à un ou plusieurs sous-titres d'une durée de mise en œuvre particulière par rapport à un indicateur de temps associé au message électronique reçu.

8. Procédé selon la revendication 6 ou 7, comprenant en outre :
la sélection à partir de la mémoire d'une capture d'écran du programme média diffusé passant actuellement sur base d'au moins le premier horodateur, dans lequel la capture d'écran sélectionnée a un deuxième horodateur respectif à proximité du premier horodateur (906) .

9. Procédé selon l'une quelconque des revendications précédentes, comprenant en outre :
l'acquisition d'au moins un de sous-titres et de données de sous-titrage associées à un ou plusieurs programmes médias actuellement diffusés (602) ; et
la mise à jour d'un index de recherche stocké dans la mémoire afin d'inclure des sous-titres acquis ou des données de sous-titrage ainsi que les horodateurs correspondants indiquant l'heure à laquelle chaque sous-titre ou partie de données de sous-titres acquis a été présentable (604).

10. Procédé selon l'une quelconque des revendications précédentes, comprenant en outre :
l'acquisition de captures d'écran à partir d'un ou plusieurs programmes médias diffusés alors que le ou les programmes médias diffusés sont diffusés, dans lequel les captures d'écran sont acquises à intervalles réguliers (702, 703) ; et
la mise à jour d'un index de recherche stocké dans la mémoire afin d'inclure les captures d'écran acquises ainsi que les horodateurs correspondants indiquant l'heure à laquelle chaque capture d'écran acquise était présentable (704).

11. Procédé selon l'une quelconque des revendications précédentes, comprenant en outre :
l'acquisition de vidéoclips à partir d'un ou de plusieurs programmes médias diffusés alors que l'un ou plusieurs programmes médias diffusés sont diffusés, dans lequel les vidéoclips sont acquis à intervalles réguliers ; et
la mise à jour d'un index de recherche stocké dans la mémoire afin d'inclure les vidéoclips acquis ainsi que les horodateurs correspondants indiquant l'heure à laquelle chaque vidéoclip acquis était présentable.

12. Procédé selon l'une quelconque des revendications précédentes, dans lequel la génération du message électronique supplémentaire correspondant comprend :
l'identification du contenu associé au programme média diffusé référencé ; la complétion du message électronique reçu avec au moins un indicateur affichable du contenu identifié, dans lequel l'identification du contenu comprend :
la comparaison du texte composé par un utilisateur à partir du message électronique reçu avec un ou plusieurs sous-titres du programme média diffusé actuellement référencé pour déterminer si le texte du contenu composé par un utilisateur correspond à au moins un du ou des sous-titres ; et
l'identification d'un horodateur correspondant associé à l'au moins un sous-titre correspondant, en réponse à la détermination que le texte composé par un utilisateur correspond au moins à un sous-titre.

13. Procédé selon la revendication 12, dans lequel l'un ou les sous-titres employés dans la comparaison sont limités au ou aux sous-titres d'une durée de mise en œuvre particulière par rapport à un indicateur de temps associé au message électronique reçu.

14. Procédé selon la revendication 12 ou 13, dans lequel l'indicateur affichable inclut une estimation à partir d'un ou de plusieurs des sous-titres.

15. Système informatique pour la complétion d'un message électronique associé à un programme média diffusé privé, comprenant :
un ou plusieurs processeurs (302) ;
une mémoire (306) ; et
un ou plusieurs programmes, dans lequel l'un ou plusieurs programmes sont stockés dans la mémoire et configurés pour être exécutés par le ou les processeurs, le ou les programmes incluant des instructions pour la réalisation de toutes les étapes du procédé selon l'une quelconque des revendications précédentes.

16. Produit de programme informatique comprenant des instructions qui, lorsque le programme est exécuté par un ordinateur, amènent l'ordinateur à mettre en œuvre toutes les étapes du procédé selon l'une quelconque des revendications 1-14.
